(19) Europäisches Patentamt
European Patent Office
Office européen des brevets

(11) Publication number: **0 116 254**
**B1**

(12) **EUROPEAN PATENT SPECIFICATION**

(45) Date of publication of patent specification: **15.10.86**

(51) Int. Cl.$^4$: **C 07 F 9/40**, A 01 N 57/22

(21) Application number: **83420022.2**

(22) Date of filing: **04.02.83**

(54) **New phenylthionophosphonic acid esters.**

(43) Date of publication of application:
**22.08.84 Bulletin 84/34**

(45) Publication of the grant of the patent:
**15.10.86 Bulletin 86/42**

(84) Designated Contracting States:
**DE FR GB IT**

(56) References cited:
**US-A-3 760 041**
**US-A-3 872 185**

**CHEMICAL ABSTRACTS, vol. 83, no. 1, 7th July 1975, page 228, no. 2359m, Columbus, Ohio, USA**

**CHEMICAL ABSTRACTS, vol. 83, no. 19, 10th November 1975, page 156, no. 159172t, Columbus, Ohio, USA**

**CHEMICAL ABSTRACTS, vol. 83, no. 3, 21st July 1975, page 140, no. 23457g, Columbus, Ohio, USA**

(73) Proprietor: **HOKKO CHEMICAL INDUSTRY CO., LTD**
**2, Hongoku-cho 4-chome**
**Nihonbashi Chuo-ku Tokyo (JP)**

(72) Inventor: **Kitaori, Kazuhiko**
**2385 Toda, Atsugi-shi**
**Kanagawa-ken (JP)**
Inventor: **Ishikawa, Hiromichi**
**5-40-12, Asahi-cho Atsugi-shi**
**Kanagawa-ken (JP)**
Inventor: **Moriyama, Satoru**
**410-45, Ojiri**
**Hatano-shi Kanagawa-ken (JP)**
Inventor: **Chono, Tadashi**
**2385, Toda, Atsugi-shi**
**Kanagawa-ken (JP)**
Inventor: **Uchiyama, Tsugio**
**Coop Yoneyama 2-2-28 Mizuhiki**
**Atsugi-shi Kanagawa-ken (JP)**

(74) Representative: **Maureau, Pierre**
**Cabinet GERMAIN & MAUREAU Le Britannia - Tour C 20, Boulevard E. Déruelle**
**F-69003 Lyon (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 116 254 B1**

Courier Press, Leamington Spa, England.

CHEMICAL ABSTRACTS, vol. 87, no. 7, 15th August 1977, page 421, no. 52759v, Columbus, Ohio, USA

CHEMICAL ABSTRACTS, vol. 99, no. 1, 4th July 1983, page 533, no. 5822y, Columbus, Ohio, USA

**Description**

This invention relates to phosphonic acid ester derivatives and, more particularly, to phenylthionophosphonic acid O,O-di-esters having a high insecticidal activity, high miticidal activity and high nematocidal activity in combination. This invention also relates to a process for the production of these phosphonic acid ester derivatives, as well as to an insecticidal, miticidal and nematocidal composition containing the above-mentioned compound as active ingredient.

Many kinds of organo-phosphorus compounds having insecticidal activity, miticidal activity and/or nematocidal activity are known. Thus, O-(N-alkoxy-benzimidoyl)-(thiono)-phosphoric (phosphonic) acid esters having insecticidal and miticidal activities are disclosed in Japanese published patent application "Kokai" Sho 47—9149 (corresponding to US patent n° 3,760,041), Japanese published patent application "Kokai" Sho 49—13335 (corresponding to US patent No. 3,872,185) and Japanese published patent applications "Kokai" Sho 49—132244 and Sho 50—64436. O-(N-Alcoxy-substituted alkylimidoyl)(-(thiono)-phosphoric acid esters are also known to have insecticidal and miticidal activities as disclosed in Japanese published patent applications "Kokai" Sho 50—6724 and Sho 52—33627.

Amongst the insect pests, rice stem borer, brown planthoppers, rice leafhoppers, common cutworms and aphids may be mentioned as the main insect pests which predominantly infest aquatic rice plants cultivated in the submerged field or the crops cultivated in upland fields in recent years. For the purpose of combating these main insect pests, there have been applied large quantities of insecticides of the organo-phosphorus compound type, insecticides of the carbamate compound type, insecticides of the chlorinated compound type and others for a long time. In these years, there occurs an objectionable phenomena that the main insect pests have gained a resistance against the known insecticidal compounds which have extensively been used in the crops fields.

An object of this invention is to provide an insecticide of organo phosphorus compound type to which the resistance is not yet gained by the main insect pests of the crop fields. Another object of this invention is to provide an insecticide of organophosphorus compound type which exhibits a higher insecticidal activity than that of the organophosphorus insecticides conventionally used in the crop fields. Further objects of this invention will be clear from the following descriptions.

It has been now found that phenylthionophosphonic acid O,O-di-esters of the general formula:

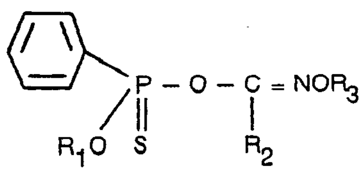

(I)

wherein $R_1$ is an alkyl group containing 1—6 carbon atoms, $R_2$ is a hydrogen atom, an alkyl group containing 1—6 carbon atoms, an alkenyl group containing 2—6 carbon atoms or an alkynyl group containing 2—6 carbon atoms, and $R_3$ is an alkyl group containing 1—6 carbon atoms, an alkenyl group containing 2—6 carbon atoms or an alkynyl containing 2—6 carbon atoms exhibit a high insecticidal activity, a high miticidal activity and a high nematocidal activity in combination, and that the compounds of formula (1) show a remarkably high insecticidal activity against the "resistant" strains of insect pests such as green rice leafhopper which have developed resistance to various kinds of the known organ phosphorus type insecticides and of the known carbamate type insecticides.

More specifically, in formula (I) $R_1$ is a methyl or ethyl group; $R_2$ is a hydrogen atom, or a methyl, ethyl, n-propyl, i-propyl, n-butyl, vinyl propenyl or ethynyl group; and $R_3$ is a methyl, ethyl, i-propyl, vinyl, allyl or propargyl group.

According to a preferred embodiment of the first aspect invention, there are provided phenylthionophosphonic acid O,O-di esters of the formula:

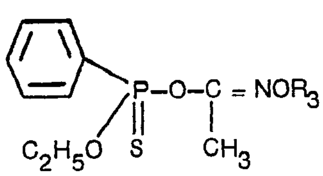

wherein $R_3$ is an alkyl group of 1—4 carbon atoms, an alkenyl group of 2—4 carbon atoms or an alkynyl group of 2—4 carbon atoms.

More specifically, in formula (I), $R_3$ is methyl, ethyl, i-propyl, allyl or propargyl group.

Although the new compounds of general formula (I), according to this invention have a chemical structure similar to that of the known O-(N-alkoxy-benzimidoyl)-(thiono)-phosphor (phosphonic) acid esters and O-(N-alkoxy-substituted alkylimidoyl)-(thiono)phosphoric acid esters taught in the above-mentioned chemical literature, it has been found that the compounds of this invention are remarkably

superior to the known, similar compounds in the insecticidal activity, miticidal activity and nematocidal activity. Besides, it is observed that the pesticidal activities of the compounds of this invention are much more rapid and lasting than those of the known, similar compounds and are systemic in nature which makes it possible to achieve the desired pesticidal effect on pests inhabiting the earth by applying the compounds to aquatic surface or soil. In addition, the compounds of this invention advantageously exhibit little or no toxicity to mammalian animals and do not exhibit any phyto-toxicity to crop plants at all.

Representative examples of the compounds of formula (I), according to this invention are listed in Table 1 below, together with the structural formulae, boiling point and optical refractive index thereof.

TABLE 1

| Compound No. | Structural Formula | Boiling Point (°C /mmHg) (10$^2$Pa) | Refractive Index ($n_D^{24}$) |
|---|---|---|---|
| 1 | 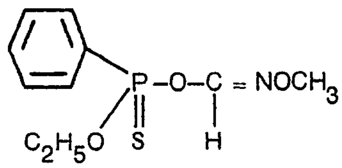 | 105~108/0.01 (0,0133) | 1.5389 |
| 2 | 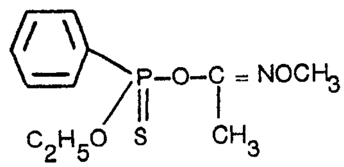 | 103~105/0.01 (0,0133) | 1.5364 |
| 3 | 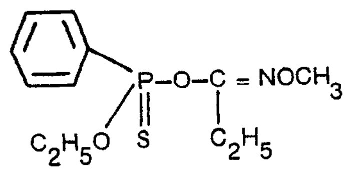 | 104~107/0.01 (0,0133) | 1.5328 |
| 4 | 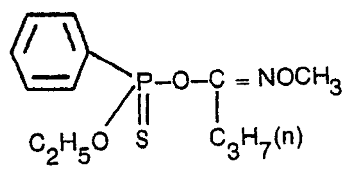 | 110~112/0.01 (0,0133) | 1.5291 |
| 5 | 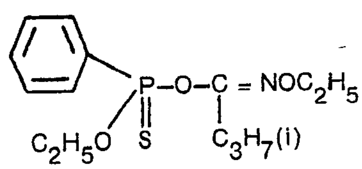 | 109~112/0.01 (0,0133) | 1.5288 |
| 6 | 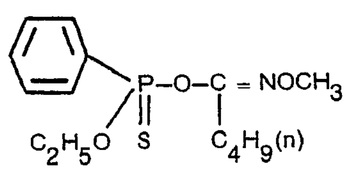 | 113~115/0.01 (0,0133) | 1.5280 |
| 7 | 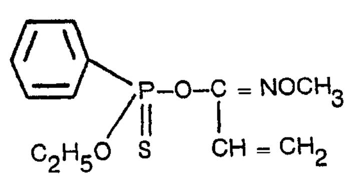 | 110~114/0.015 (0,0199) | 1.5409 |

TABLE 1 (Continued)

| Compound No. | Structural Formula | Boiling Point (°C /mmHg) | Refractive Index ($n_D^{24}$) |
|---|---|---|---|
| | | ($10^2$Pa) | |
| 8 | 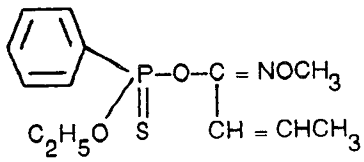 | 112~116/0.015 (0,0199) | 1.5393 |
| 9 | 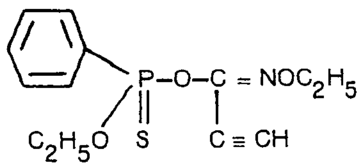 | 107~110/0.015 (0,0199) | 1.5492 |
| 10 | 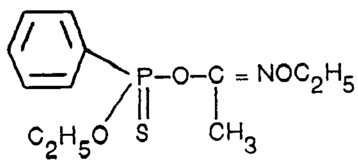 | 105~108/0.01 (0,0133) | 1.5333 |
| 11 | 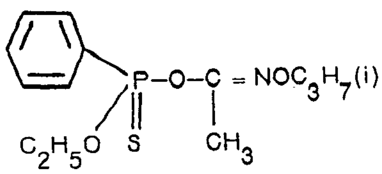 | 108~111/0.01 (0,0133) | 1.5276 |
| 12 | 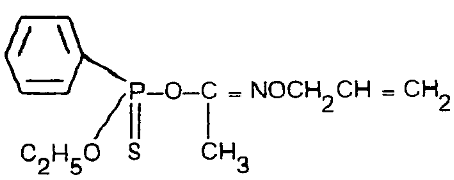 | 112~115/0.015 (0,0199) | 1.5411 |
| 13 | 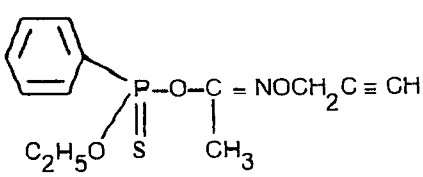 | 106~109/0.015 (0,0199) | 1.5497 |
| 14 | 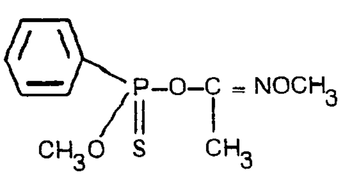 | 98~102/0.007 (0;0093) | 1.5394 |

TABLE 1 (Continued)

| Compound No. | Structural Formula | Boiling Point (°C /mmHg) (10$^2$Pa) | Refractive Index ($n_D^{24}$) |
|---|---|---|---|
| 15 | 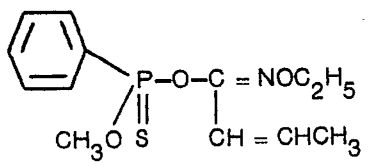 | 97~100/0.007 (0,0093) | 1.5490 |
| 16 | 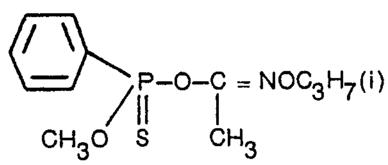 | 101~104/0.007 (0,0093) | 1.5302 |
| 17 | 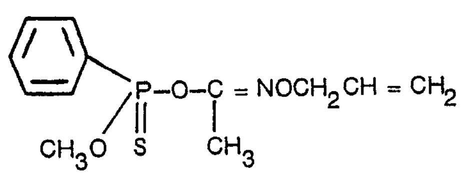 | 98~102/0.007 (0,0093) | 1.5479 |

Chemical designations of Compounds no 1 to 17 given in Table 1 above are as follows:
(1) O-ethyl,O-(N-methoxyformimidoyl)phenylthiono-phoshonate (Compound n° 1);
(2) O-ethyl,O-(N-methoxyacetimidoyl) phenylthiono-phosphonate (Compound n° 2);
(3) O-ethyl,O-(N-methoxypropionimidoyl) phenylthiono-phosphonate (Compound n° 3);
(4) O-ethyl,O-(N-methoxy-n-butyrimidoyl) phenylthiono-phosphonate (Compound n° 4);
(5) O-ethyl,O-(N-ethoxy-i-butyrimidoyl) phenylthiono-phosphonate (Compound n° 5);
(6) O-ethyl,O-(N-methoxyvalerimidoyl) phenylthiono-phosphonate (Compound n° 6);
(7) O-ethyl,O-(N-methoxyacrylimidoyl) phenylthiono-phosphonate (Compound n° 7);
(8) O-ethyl,O-(N-methoxycrotonimidoyl) phenylthiono-phosphonate (Compound n° 8);
(9) O-ethyl,O-(N-ethoxypropionimidoyl) phenylthiono-phosphonate (Compound n° 9);
(10) O-ethyl,O-(N-ethoxyacetimidoyl) phenylthiono-phosphonate (Compound n° 10);
(11) O-ethyl,O-(N-i-propoxyacetimidoyl) phenylthiono-phosphonate (Compound n° 11);
(12) O-ethyl,O-(N-allyloxyacetimodoyl) phenylthiono-phosphonate (Compound n° 12);
(13) O-ethyl,O-(N-propargyloxyacetimidoyl) phenylthiono-phosphonate (Compound n° 13);
(14) O-methyl,O-(N-methoxyacetimidoyl) phenylthiono-phosphonate (Compound n° 14);
(15) O-methyl,O-(N-ethoxycrotonimidoyl) phenylthiono-phosphonate (Compound n° 15);
(16) O-methyl,O-(N-i-propoxyacetimidoyl) phenylthiono-phosphonate (Compound n° 16);
(17) O-methyl,O-(N-allyloxyacetimidoyl) phenylthiono-phosphonate (Compound n° 17);

The compounds of general formula (I), according to this invention can be produced by a process which is shown by the following reaction scheme:

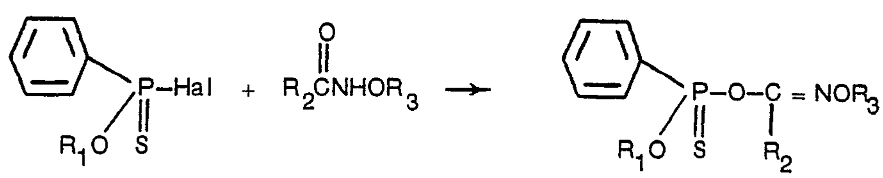

(II) (III) (I)

in which $R_1$, $R_2$ and $R_3$ have the same meanings as defined above and Hal denotes a halogen atom such as chlorine or bromine.

According to a second aspect of this invention, therefore, there is provided a process for the production of a phenylthionophosphonic acid O,O-di-ester of the general formula:

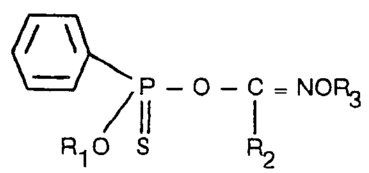

(I)

which comprises reacting a phenylthionophosphonic halide of the general formula:

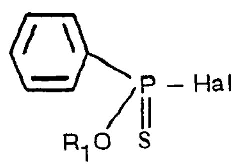

(II)

wherein Hal denotes a halogen atom with a hydroxamate of the general formula:

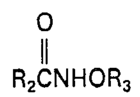

(III)

wherein $R_1$, $R_2$ and $R_3$ have the same meanings as defined above.

In the process of this invention, the reaction may be conducted in the presence of a base acting as an acid-binding agent, if required. Suitable bases for this purpose includes inorganic bases, for example, an alkali metal hydroxide such as sodium hydroxide or potassium hydroxide; an alkali metal carbonate such as sodium carbonate or potassium carbonate; an alkali metal alkoxide such as sodium methoxide; sodium hydride; metallic sodium, as well as organic bases, for example, a tertiary amine such as triethylamine, diméthylaniline or pyridine which have been employed conventionally as acid-binding agents. The reaction is conducted preferably in an inert organic solvent which may be, for example, aliphatic or aromatic hydrocarbons such as benzene, toluene, xylene, and petroleum ether; chlorinated aliphatic or aromatic hydrocarbons such as carbon tetrachloride, methylene chloride, chloroform and chlorobenzene; ketones such as acetone, methyl ethyl ketone, methyl isopropyl ketone and methyl isobutyl ketone; ethers such as diethyl ether, dibutyl ether, tetrahydrofuran and dioxane; and nitriles such as acetonitrile and propionitrile.

The reaction temperature may vary within a wide range and usually be in a range of 0°C to 120°C and preferably in a range of 20°C to 80°C. The reaction may proceed under atmospheric pressure, though the reaction may be conducted under an elevated pressure, if desired. The reactants of the formulae (II) and (III) may preferably be present in a substantially equimolar proportion in the reaction mixture.

The compounds of this invention are effective in combatting a wide variety of insect pests such as insects sucking as the bait the body juice of plants or animals; and insects chewing a portion of plants or animals or a material of vegetable or animal origin, as well as acarine pests and nematodes. The insect and acarine pests which may be combatted with the compounds of this invention include those associated with agriculture (including the growing of crops for food and fibre, horticulture and animal husbandry), such as the insect and acarine pests infesting the growing plants, those associated with forestry, the storage of products of vegetable origin, such as grains, fruits and timber, and also the pests associated with the transmission of diseases of man and animals, such as houseflies and mosquitos. The compounds of this invention are useful to combat a wide variety of the insect and acarine pests as mentioned below.

Thus, the pests which may be combatted with the new compounds of this invention include: *Coleoptera* insect pests such as azuki been weevil *(Callosobruchus chinensis),* maize weevil *(Sitophilùs zeamais),* red flour beetle *(Tribolium castaneum),* twenty-eight-spotted ladybird *(Henosepilachna vigintioctopunctata)* and barley wireworm *(Agriotes fuscicollis); Lepidopterous* insect pests such as gypsy moth *(Lymantria dispar),* common cabbageworm *(Pieris rapae),* common cutworm, *(Spodoptera litura),* rice stem borer *(Chilo suppressalis),* summer fruit tortrix *(Adoxophyes orana fasciata)* and almond moth *(Ephestia cautella); Hemipterous* insect pests such as green rice leafhopper *(Nephotettix cincticeps),* brown rice planthopper *(Nilaparvata lugens),* small rice planthopper *(Laodelphax striattellus),* comstock mealybug *(Pseudococcus comstocki),* green peach aphid *(Myzus persicae),* and apple aphid *(Aphis pomonella); Orthopterous* insect pests such as German cockroach *(Blattella germanica),* American cockroach *(Periplaneta americana),* and African mole cricket *(Gryllotalpa africana); Dipterous* insect pests such as house fly *(Musca domestica),* yellow-fever mosquito *(Aedes aegypti),* seedcorn maggot *(Hylemya platura)* and smaller house mosquito *(Culex tritaeniorhynchus);* and *Thripidae* insect pests such as southern yellow thrips *(Thrips palmi).* The acarine pests which may be combatted with the new compounds of this invention include: carmine spider mite *(Tetranychus cinnabarinus),* two spotted spider mite *(Tetranychus*

*urticae)*, citrus red mite *(Panonychus citri)* and pink citrus rust mite *(Aculops pelekassi)* and the like. The nematodes which may be combatted with the new compounds of this invention include: southern rootknot nematode *(Meloidogyne incognita)*, rice white-tip nematode *(Aphelenchoides besseyi)*, soybean cust nematode *(Heteroda glycines)* and others.

In use, the compounds of this invention may be applied to the pests, to the locus of the pests, to the habitat of the pests, or to growing plants liable to infestation by the pests, by any of the known means of applying the pesticidal compounds, for example, by dusting or spraying. The compounds of this invention may be formulated into conventional formulations or preparations for pesticidal usage, by mixing the active compound of this invention with an acceptable known diluent or carrier material.

According to a third aspect of this invention, therefore, there is provided an insecticidal, miticidal and nematocidal composition comprising an insecticially, miticidally and/or nematocidally effective amount of a phenylthionosphosphonic acide O,O-di-ester of the general formula:

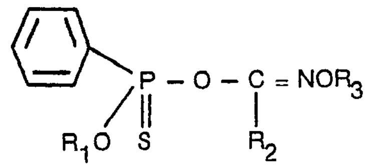

(I)

wherein $R_1$, $R_2$ and $R_3$ are as defined above, in combination with an acceptable diluent or carrier.

The pesticidal (insecticidal, miticidal and nematocidal) composition of this invention may be prepared by formulating a compound of general formula (I) in the form of emulsifiable concentrate, wettable powder, flowable powder, dusting powder, driftless (DL-type) powder, granules, fine granules, tablets, liquid preparations, according to conventional formulation techniques. The carrier materials to be used may be solid or liquid ones which have been used conventionally in the preparations for agricultural and horticultural usages. Suitable carriers in the composition of this invention are not limited to any particular ones. Suitable solid carriers include, for example mineral powders such as kaolin, bentonite, clay, montmorillonite, talc, diatomaceous earth, mica, vermiculite, gypsum, calcium carbonate, apatite, kieselguhr, white carbon, slaked lime, siliceous sand, ammonium sulfate and urea; vegetable materials such as soybean powder, wheat flour, wood meal, tobacco powder, starch and crystalline cellulose; polymeric compounds such as petroleum resin, polyvinyl chloride, ketone resin and dammar gum; alumina, silicates, polysaccharide, colloidal silica and waxes. Suitable liquid carriers include, for example, water; alcohols such as methanol, ethanol, n-propanol, isopropanol, butanol, ethylene glycol and benzyl alcohol; aromatic hydrocarbons such as benzene, toluene, xylene, ethylbenzene and methylnaphtalene; halogenated hydrocarbons such as chloroform, carbon tetrachloride, dichloromethane, chloroethylene, monochlorobenzene, trichlorofluoromethane and dichlorodifluoromethane; ethers such as ethylether, ethylene oxide, dioxane and tetrahydrofuran, ketones such as acetone, methyl ethyl ketone, cyclohexanone, methyl isobutyl ketone and isophorone; esters such as ethyl acetate, butyl acetate, ethylene glycol acetate and amyl acetate; acid amides such as dimethylformamide and dimethylacetamide; nitriles such as acetonitrile, propionitrile and acrylonitrile; sulfoxides such as dimethyl sulfoxide; alcohol ethers such as ethylene glycol monomethyl ether and ethylene glycol monoethyl ether; aliphatic and cycloaliphatic hydrocarbons such as n-hexane, cyclohexane, industrial gasoline (petroleum ether, solvent naphta) and petroleum fractions (paraffins, kerosene, gas oil).

When the active compound of this invention is formulated in the form of an emulsifiable concentrate, wettable powder, flowable sols, one or more surface active agents are used for the purposes of emulsification, dispersion, solubilization, wetting, foaming, lubrication and/or spreading. Surface active agents may be of non-ionic, anionic, cationic, and amphoteric types. Examples of the nonionic type are polyoxyethylene alkylethers, polyoxyethylene alkylesters, polyoxyethylene sorbitan-alkylesters, sorbitan alkylesters and the like. Examples of the anionic type are alkylbenzene sulfonates, alkyl sulfosuccinates, alkyl sulfates, polyoxyethylene alkyl sulfates, aryl sulfonates and the like. Examples of the cationic type include quaternary ammonium compounds such as stearyl trimethyl ammonium chloride and alkyl dimethylbenzyl ammonium chloride and polyoxyethylene alkylamines. Examples of the amphoteric type are carboxylic acids of betaine type and alkyl sulfates.

Other additives which may be used as an adjuvant include polyvinyl alcohol, carboxymethylcellulose, acasiagum, polyvinyl acetate, gelatine, casein, sodium alginate and tragacanth gum, for example.

The composition according to this invention in the form of a variety of formulations as above-mentioned may contain 0,1 to 95%, preferably 0,5 to 90%, by weight, of a phenylthionophosphonic acid O-alkyl,O-(N-alkoxyalkanoylimidoyl)ester of formula (I) according to this invention. Thus, the composition may usually contain 0,1 to 5% by weight of the active compound when formulated in the form of dusting powder, DL-powder, of fine granules, 1 to 10% by weight in the form of granules and 5 to 95% by weight in the form of wettable powder, emulsifiable concentrate or liquid preparations.

When the composition of this invention is in the form of dusting powder, DL-powder, fine granules or granules, the composition will be applied as such to plants, surfaces and/or interior of soils or aquatic fields upon or in which pests, mites and/or nematodes are living at a rate of 2 to 5 kg per 10 ares (or at a rate of 50

to 500 g of the active ingredient per 10 ares). For nematocidal purposes, in particular, the composition may be applied even at a higher rate of about 500 to 10,000 g of the active ingredient per 10 ares. The composition in the form of emulsifiable concentrate, wettable powder, liquid preparations or flowable sols may usually be diluted with water or a suitable solvent before use to give a concentration of the active ingredient of about 5 to 1,000 ppm, preferably about 50 to 500 ppm, the dilute formulation being usually applied at a rate of 100 to 300 l per 10 ares. Emulsifiable concentrate, liquid preparations and flowable sols may also be applied as such or in a diluted form with a small amount of water, i.e., in the form of a LV spray or ULV spray, at a rate of about 50 to 3000 ml per 10 ares mainly as aerial spraying agent.

The composition of this invention may further incorporate, if desired, other insecticide, miticide, nematocide, fungicide and/or herbicide.

According to a further aspect of this invention, there is provided a method of combating insect pests, acarine pests and/or nematode pests at a locus of infestation, which comprises treating the pests of the locus of infestation with an insecticidally, miticidally or nematocidally effective amount of a compound of general formula (I).

The invention is now illustrated with reference to the following Examples. Examples 1 to 3 are illustrative of the production of the new compounds of this invention; Examples 4 to 7 illustrative of the formulations comprising the new compound of this invention; and Examples 8 to 18 are illustrative of the pesticidal properties of the new compounds of this invention.

## Example 1

Production of Compound n° 2 of the formula:

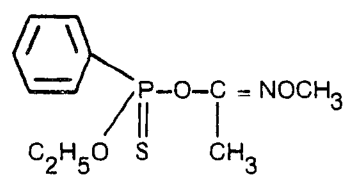

To a solution of methyl acetohydroxamate (8.9 g) in methyl ethyl ketone (100 ml) was added potassium hydroxide (5.6 g) and the mixture was heated at 50°C for 1 hour under stirring. Then, O-ethyl-phenylthionophosphonic chloride (22.1 g) was added to the reaction mixture and the reaction was conducted at 80°C for 5 hours under stirring. After the methyl ethyl ketone was distilled off under a reduced pressure, benzene (200 ml) was added to the residue and the resulting solution was washed with water (200 ml), then with a 2% aqueous sodium hydroxide solution and finally with water until the washings became neutral. The solution thus washed was dried over anhydrous sodium sulfate, subjected to a distillation under a reduced pressure to remove the benzene therefrom and then to a vacuum distillation to yield O-ethyl, O-(N-methoxyacetimidoyl) phenylthionophosphonate (19.7 g; 72%).

b.p 103~105°C/0·01 mmHg (0.0133 $10^2$Pa); $n_D^{24}$ 1.5364

## Example 2

Production of Compound n° 12 of the formula:

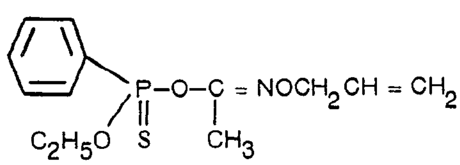

To a solution of allyl acetohydroxamate (11.5 g) in acetonitrile (100 ml) was added potassium hydroxide (5.6 g) and the mixture was heated at 50°C for 1 hour under stirring. Then, O-ethyl-phenylthionophosphonic chloride (22.1 g) was added to the mixture and the reaction was conducted at 80°C for 5 hours under stirring. After the acetonitrile was distilled off under a reduced pressure, benzene (200 ml) was added to the residue and the resulting solution was washed with water (200 ml), then with a 2% aqueous sodium hydroxide solution and finally with water until the washings became neutral. The solution thus washed was dried over anhydrous sodium sulfate, subjected to a distillation under a reduced pressure to remove the benzene therefrom and then to a vacuum distillation to yield O-ethyl, O-(N-allyloxy-acetimidoyl) phenylthionophosphonate (16.2 g; 54%).

b.p 112~115°C/0.015 mmHg (0.0199.$10^2$Pa): $n_D^{24}$ 1.5411

Example 3

Production of Compound n° 1 of the formula:

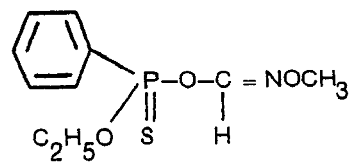

To a solution of methyl formhydroxamate (7.5 g) in tetrahydrofuran (100 ml) was added sodium hydride (4.0 g as 60% suspension in oil) under ice-cooling and the mixture was stirred at room temperature for 10 minutes. Then, O-ethyl-phenylthionophosphonic chloride (22.1 g) was added to the mixture and the reaction was conducted at 65°C for 2 hours under stirring. The reaction solution, after the addition of benzene (200 ml) thereto, was washed with water (200 ml), then with a 2% aqueous sodium hydroxide solution and finally with water until the washings became neutral. The solution thus washed was dried over anhydrous sodium sulfate, subjected to a distillation under a reduced pressure to remove the solvent used and then to a vacuum distillation to yield O-ethyl, O-(N-methoxyformimidoyl) phenylthionophosphonate (19.2 g; 74%).

b.p. 105~108°C/0.01 mmHg ($0.0133 \cdot 10^2$Pa); $n_D^{24}$ 1.5389.

Example 4

Emulsifiable concentrate

40 parts (by weight) of the Compound n° 2 prepared in the Example 1, 20 parts (by weight) of an emulsifying agent consisting of the condensation product of ethylene oxide with fatty alcohols (available as a trade-name "Solpol 700 H", a product of Toho Chemical Industry Company, Japan), and 40 parts (by weight) of xylene were mixed together uniformly to give an emulsifiable concentrate which may be diluted with water upon use to give a sprayable emulsion.

Example 5

Wettable powder

25 Parts (by weight) of the Compound n° 11 listed on Table 1, 15 parts (by weight) of white carbon (finely divided silica), 3 parts (by weight) of calcium lignin-sulfonate, 2 parts (by weight) of a polyoxyethylene nonylphenylether as the non-ionic emulsifier, 5 parts (by weight) of diatomaceous earth and 50 parts (by weight) of clay were ground together and mixed uniformly with each other in a mixer to give a wettable powder which may be dispersed in water upon use.

Example 6

Dusting powder

1.5 Part (by weight) of the Compound n° 14 listed in Table 1 was mixed well with 98.5 Parts (by weight) of clay, followed by grinding to small particle size. A dusting powder was obtained, which was directly be applied by a known dusting device.

Example 7

Granules

5 Parts (by weight) of the Compound n° 2, 1.5 parts (by weight) of lauryl sulfate, 1.5 parts of calcium ligninsulfonate and 67 parts of kaolin were admixed with 15 parts (by weight) of water, followed by kneading in a kneader and granulation in a granulator. The granules so shaped were then dried in a fluidizing drier to give granules which may directly be applied to the soil.

Example 8

This Example illustrates the test of estimating the insecticidal activity of test compounds against rice stem borer.

Aquatic rice plants of average height of about 50 cm which had been grown in a pot having an area of 1/10,000 ares at the soil surface were infested with 30 larvae of rice stem borer (*Chilo suppressalis*) which had just hatched from the eggs. 5 days after the infestation, the rice plants and the larvae were sprayed with the composition under test which was prepared by diluting with water the wettable powder of this invention made according to the preceding Example 5 to the concentration of the active compound as indicated in Table 2 below. The composition was sprayed by means of a spray gun and was applied at the rate of application of 50 ml per three pots. 5 days after the spraying, the rice plants were dissected and the numbers of the dead larvae and the surviving larvae were counted, respectively, and percent of mortality was assessed. The tests were conducted with three replicates for a particular value of the concentration of the active compound under test, and the average of % mortality was calculated. The results (expressed as averaged % mortality) was calculated. The results (expressed as averaged % mortality) are set out in Table 2 below.

TABLE 2

| Test Compounds | Mortality (%) Concentration of active compound sprayed (ppm) 100 | 50 |
|---|---|---|
| Compound No. 1 | 100 | 95 |
| Compound No. 2 | 100 | 100 |
| Compound No. 3 | 100 | 95 |
| Compound No. 4 | 100 | 93 |
| Compound No. 5 | 100 | 93 |
| Compound No. 6 | 100 | 93 |
| Compound No. 7 | 100 | 95 |
| Compound No. 8 | 100 | 95 |
| Compound No. 9 | 100 | 93 |
| Compound No. 10 | 100 | 95 |
| Compound No. 11 | 100 | 100 |
| Compound No. 12 | 100 | 100 |
| Compound No. 13 | 100 | 93 |
| Compound No. 14 | 100 | 95 |
| Compound No. 15 | 100 | 95 |
| Compound No. 16 | 100 | 95 |
| Compound No. 17 | 100 | 95 |
| Comparative Compound A | 78 | 47 |
| Comparative Compound B | 60 | 35 |
| Comparative Compound C | 78 | 55 |
| Comparative Compound D | 78 | 47 |
| Comparative Compound E | 80 | 60 |
| Comparative Compound F | 80 | 57 |
| Comparative Compound G | 100 | 67 |
| Comparative Compound H | 80 | 57 |
| No treatment (Control) | 0 | |

Compound Nos. 1 to 17 as above are identical to those listed in Table 1. The same reference is made in the following tables in this specification.

Comparative Compound A:

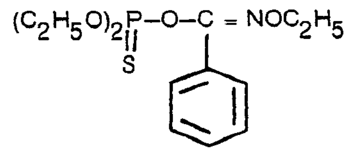

(see U.S. Patent No. 3,760,041)

Comparative Compound B:

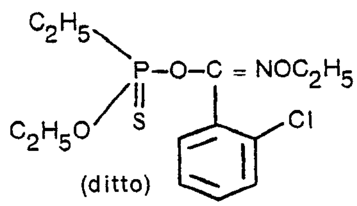

(ditto)

Comparative Compound C:

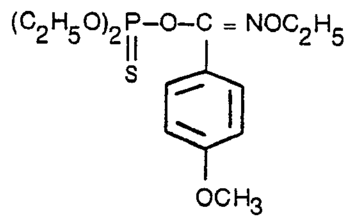

(see U.S. Patent No. 3,872,185)

Comparative Compound D:

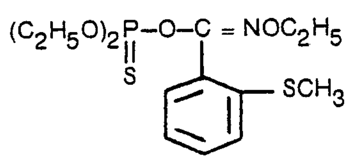

(see U.S. Patent No. 3,872,185)

Comparative Compound E:

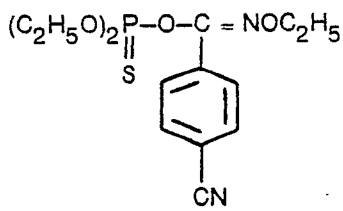

(see Japanese published patent application "Kokai" Sho 49–132244)

Comparative Compound F:

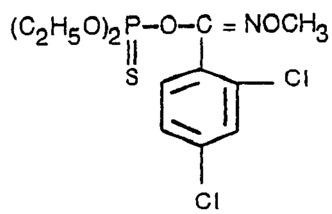

(see Japanese published patent application "Kokai" Sho 50–64436)

Comparative Compound G:

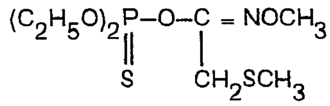

(see Japanese published patent application "Kokai" Sho 50—6724)

Comparative Compound H:

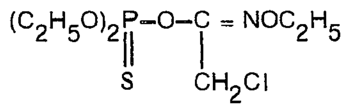

(see Japanese published patent application "Kokai" Sho 52—33627)

Example 9

This Example illustrates the test for estimating the insecticidal activity of test compounds against red flour beetle.

A sheet of filter paper placed on the bottom of a glass Petri dish of 9 cm diameter was sprayed with 1 ml of the composition under test which was prepared by diluting with water the emulsifiable concentrate of this invention made in the Example 4, to the concentration of the active compound indicated in Table 3 below. Twenty adult red flour beetles (*Tribolium castaneum*) were then placed into the dish and the dish was kept in a constant-temperature room at 25°C. 24 hours later, the number of the dead insects was counted and % mortality was assessed. The tests were conducted with three replicates for a particular value of the concentration of the active compound under test, and the average of % mortality was calculated. The results (expressed as the averaged % mortality) are given in Table 3 below.

TABLE 3

| Test Compounds | Mortality (%) Concentration of active compound sprayed (ppm) 300 | 100 |
|---|---|---|
| Compound No. 1 | 100 | 97 |
| Compound No. 2 | 100 | 100 |
| Compound No. 3 | 100 | 90 |
| Compound No. 4 | 100 | 97 |
| Compound No. 5 | 100 | 90 |
| Compound No. 6 | 100 | 90 |
| Compound No. 7 | 100 | 97 |
| Compound No. 8 | 100 | 90 |
| Compound No. 9 | 100 | 97 |
| Compound No. 10 | 100 | 90 |
| Compound No. 11 | 100 | 100 |
| Compound No. 12 | 100 | 100 |
| Compound No. 13 | 100 | 90 |
| Compound No. 14 | 100 | 97 |
| Compound No. 15 | 100 | 97 |
| Compound No. 16 | 100 | 97 |
| Compound No. 17 | 100 | 90 |
| Comparative Compound A | 77 | 43 |
| Comparative Compound B | 77 | 40 |
| Comparative Compound C | 83 | 43 |
| Comparative Compound D | 83 | 65 |
| Comparative Compound E | 83 | 58 |
| Comparative Compound F | 77 | 50 |
| Comparative Compound G | 100 | 67 |
| Comparative Compound H | 83 | 50 |
| No treatment (Control) | 0 | |

Example 10

This Example illustrates the test for estimating the effect of the test compounds for controlling "resistant" strains of green rice leafhopper.

Aquatic rice plants of an average height of about 40 cm were planted in a pot of square cross-section (6 cm × 6 cm) and made of black colored polyvinyl chloride. These aquatic rice plants were treated by dusting thereon the dusting powder of this invention made in the Example 6, at the rate of application of the active compound as indicated in Table 4 below. After the dusting treatment, the treated rice plants were covered with a cylindrical box of 11 cm diameter in the cross-section and made of polyvinyl chloride. Twenty adult female green rice leafhoppers (*Nephotettix cincticeps*) of 3 days old after the emergence of such "resistant" strain which showed resistance against the known organo-phosphorus type insecticides and against the known carbamate-type insecticides were released into and confined in the cylindrical box containing the treated aquatic rice plants. The rice plants cultivating pot, together with the covering cylindrical box of polyvinyl chloride, was kept in a constant-temperature room at 25°C. 48 hours after the releasing of the insects, percent of the mortality was assessed. The tests were conducted with three replicates for a particular value of the concentration of the active compound under test, and the average of % mortality was calculated. The results (expressed as averaged % mortality) are set out in Table 4 below.

TABLE 4

| Test Compounds | Mortality (%) Rate of application of active compound (g/10 ares) 15 | 5 |
|---|---|---|
| Compound No. 1 | 100 | 95 |
| Compound No. 2 | 100 | 100 |
| Compound No. 3 | 100 | 93 |
| Compound No. 4 | 100 | 95 |
| Compound No. 5 | 100 | 93 |
| Compound No. 6 | 100 | 93 |
| Compound No. 7 | 100 | 97 |
| Compound No. 8 | 100 | 93 |
| Compound No. 9 | 100 | 95 |
| Compound No. 10 | 100 | 93 |
| Compound No. 11 | 100 | 98 |
| Compound No. 12 | 100 | 98 |
| Compound No. 13 | 100 | 93 |
| Compound No. 14 | 100 | 95 |
| Compound No. 15 | 100 | 97 |
| Compound No. 16 | 100 | 97 |
| Compound No. 17 | 100 | 93 |
| Comparative Compound A | 73 | 37 |
| Comparative Compound B | 67 | 23 |
| Comparative Compound C | 67 | 37 |
| Comparative Compound D | 73 | 20 |
| Comparative Compound E | 90 | 47 |
| Comparative Compound F | 73 | 33 |
| Comparative Compound G | 93 | 50 |
| Comparative Compound H | 87 | 33 |
| No treatment (Control) | 0 | |

Example 11

This Example illustrates the test for estimating the effect of test compounds for controlling green peach aphid.

Young egg plant seedlings were cultivated in a pot of square cross-section (6 cm × 6 cm), and these young egg plants were infested with 20 adult wingless green peach aphids (*Myzus persicae*) which had been reared over some successive generations. The infested egg plant was kept in a constant-temperature room for 24 hours. After the aphids on the egg plant started to reproduce, the egg plant with the infesting green peach aphids was sprayed with the composition under test which was prepared by diluting with water the emulsifiable concentrate of this invention made in the Example 4 to the concentration of the active compound as indicated in Table 5 below. The composition was applied at the rate of 30 ml per pot. The pot was subsequently kept in a constant-temperature room at 25°C. 5 days after the spraying, the number of the green peach aphids which was infesting the egg plant was counted, and percent of mortality was calculated. The tests were conducted with three replicates for a particular value of the concentration of the active compound under test, and the average of % mortality was calculated.

The results (expressed as averaged % mortality) are given in Table 5 below.

TABLE 5

| Test Compounds | Mortality (%) Concentration of active compound sprayed (ppm) 100 | 50 |
|---|---|---|
| Compound No. 1 | 100 | 90 |
| Compound No. 2 | 100 | 100 |
| Compound No. 3 | 100 | 90 |
| Compound No. 4 | 100 | 90 |
| Compound No. 5 | 100 | 90 |
| Compound No. 6 | 100 | 90 |
| Compound No. 7 | 100 | 90 |
| Compound No. 8 | 100 | 90 |
| Compound No. 9 | 100 | 90 |
| Compound No. 10 | 100 | 90 |
| Compound No. 11 | 100 | 98 |
| Compound No. 12 | 100 | 94 |
| Compound No. 13 | 100 | 90 |
| Compound No. 14 | 100 | 90 |
| Compound No. 15 | 100 | 90 |
| Compound No. 16 | 100 | 90 |
| Compound No. 17 | 100 | 90 |
| Comparative Compound A | 84 | 59 |
| Comparative Compound B | 85 | 40 |
| Comparative Compound C | 88 | 57 |
| Comparative Compound D | 85 | 51 |
| Comparative Compound E | 93 | 45 |
| Comparative Compound F | 92 | 57 |
| Comparative Compound G | 100 | 63 |
| Comparative Compound H | 94 | 57 |
| No treatment (Control) | 0 | |

## Example 12

This Example illustrates the test for controlling housefly.

A sheet of filter paper was placed on the bottom of a glass Petri dish of 9 cm diameter, and the filter paper was sprayed with 1 ml of a composition under test which was prepared by diluting with water the wettable powder of this invention made in the Example 5, to a concentration of the active compound as indicated in Table 6 below. 10 Adult houseflies (*Musca domestica*) of 4 days old after the emergence were released into and confined in the covered dish. The dish containing the houseflies was kept in a constant temperature room at 25°C. 48 hours later, the number of dead insects was counted and % mortality was assessed. The tests were conducted with three replicates for a particular value of the concentration of the active compound under test and the average of % mortality was calculated. The results (expressed as the averaged % mortality) are set out in Table 6 below.

TABLE 6

| Test Compounds | Mortality (%) Concentration of active compound sprayed (ppm) 300 | 100 |
|---|---|---|
| Compound No. 1 | 100 | 97 |
| Compound No. 2 | 100 | 100 |
| Compound No. 3 | 100 | 97 |
| Compound No. 4 | 100 | 93 |
| Compound No. 5 | 100 | 97 |
| Compound No. 6 | 100 | 97 |
| Compound No. 7 | 100 | 97 |
| Compound No. 8 | 100 | 93 |
| Compound No. 9 | 100 | 93 |
| Compound No. 10 | 100 | 97 |
| Compound No. 11 | 100 | 100 |
| Compound No. 12 | 100 | 100 |
| Compound No. 13 | 100 | 93 |
| Compound No. 14 | 100 | 97 |
| Compound No. 15 | 100 | 97 |
| Compound No. 16 | 100 | 97 |
| Compound No. 17 | 100 | 93 |
| Comparative Compound A | 70 | 43 |
| Comparative Compound B | 87 | 50 |
| Comparative Compound C | 87 | 40 |
| Comparative Compound D | 70 | 43 |
| Comparative Compound E | 83 | 43 |
| Comparative Compound F | 87 | 37 |
| Comparative Compound G | 93 | 50 |
| Comparative Compound H | 87 | 43 |
| No treatment (Control) | 0 | |

Example 13

This Example illustrates the test for estimating the effect of the compounds for controlling two-spotted spider mite.

Kidney-bean plants at the single true-leaf-extending stage planted in a pot of square cross section (6 cm × 6 cm) were infested with adult female two-spotted spider mites (*Tetranychus urticae*) which were reared over some successive generations. The number of the mites infested was 20 per pot. The infesting mites were allowed to produce eggs on the bean plants. 24 hours after the infestation, the bean plants and the mites were sprayed with 30 ml/pot of the composition under test which was prepared by diluting with water the wettable powder of this invention made in the Example 5 to a concentration of the active compound as indicated in Table 7 below. The treated plants in the pot were kept in a constant-temperature room at 25°C. 3 days after the spraying, the numbers of dead mites and surviving mites were counted and the percent mortality was assessed in the same manner as in Example 10. The tests were conducted with three replicates for a particular value of the concentration of the active compound under test, and the average of mortality (%) was calculated. The results (expressed as the averaged % mortality) are given in Table 7 below.

TABLE 7

| Test Compounds | Mortality (%) Concentration of active compound sprayed (ppm) 100 | 150 |
|---|---|---|
| Compound No. 1 | 100 | 95 |
| Compound No. 2 | 100 | 100 |
| Compound No. 3 | 100 | 95 |
| Compound No. 4 | 100 | 92 |
| Compound No. 5 | 100 | 99 |
| Compound No. 6 | 100 | 99 |
| Compound No. 7 | 100 | 93 |
| Compound No. 8 | 100 | 95 |
| Compound No. 9 | 100 | 95 |
| Compound No. 10 | 100 | 93 |
| Compound No. 11 | 100 | 100 |
| Compound No. 12 | 100 | 95 |
| Compound No. 13 | 100 | 95 |
| Compound No. 14 | 100 | 99 |
| Compound No. 15 | 100 | 99 |
| Compound No. 16 | 100 | 92 |
| Compound No. 17 | 100 | 99 |
| Comparative Compound A | 75 | 25 |
| Comparative Compound B | 85 | 38 |
| Comparative Compound C | 87 | 50 |
| Comparative Compound D | 82 | 44 |
| Comparative Compound E | 63 | 44 |
| Comparative Compound F | 85 | 53 |
| Comparative Compound G | 87 | 63 |
| Comparative Compound H | 78 | 37 |
| No treatment (Control) | 0 | |

Example 14

This Example illustrates the test under submerged condition for estimating the effect of the test compounds for controlling small brown planthopper.

Aquatic rice plants were transplanted and cultivated under the submerged condition in a pot having an area of 1/10,000 ares at the soil surface. When the aquatic rice plants so cultivated reached a 4-leaf stage, the granules of this invention prepared in the Example 7 were scattered into the surface of the submerging water in which the pot was immersed. The granules were applied at the rate of application of the active compound as indicated in Table 8 below. The test plots were classified into two, the first plot was such that two days elapsed between the application of the granules and the release of the insect pests under test; and the second plot was such that 5 days elapsed between the application of the granules and the release of the insect pests. The predetermined 2 or 5 days later, the pot was covered with a cylindrical box made of a plastic resin material and having 10 cm diameter and 30 cm height. Into the box covering the pot were released and confined therein 20 adult small brown planthoppers (*Laodelphax striattellus*). 48 hours after the release of the planthoppers, the number of the dead insects was counted and % mortality was assessed. The tests were conducted with three replicates for a particular value of the concentration of the active compound under test, and the average of % mortality was calculated. The results (expressed as the averaged % mortality) are set out in Table 8 below.

TABLE 8

| | Mortality (%) | | | |
|---|---|---|---|---|
| | Rate of application of active compound (g/10 ares) | | | |
| | 2 Days-elapsing plot | | 5 Days-elapsing plot | |
| Test Compounds | 200 | 50 | 200 | 50 |
| Compound No. 2 | 100 | 100 | 100 | 97 |
| Compound No. 7 | 100 | 90 | 97 | 90 |
| Compound No. 11 | 100 | 100 | 100 | 97 |
| Compound No. 12 | 100 | 100 | 100 | 93 |
| Compound No. 15 | 100 | 90 | 95 | 90 |
| Comparative Compound B | 63 | 27 | 33 | 0 |
| Comparative Compound F | 93 | 30 | 37 | 10 |
| Comparative Compound G | 100 | 43 | 43 | 17 |
| No treatment (Control) | 0 | | 0 | |

Example 15

This Example illustrates the test for estimating the effect of test compounds for controlling southern root-knot nematode.

A quantity of soil infested by southern root-knot nematode (*Meloidogyne incognita*) was admixed with a predetermined amount of the granules of this invention prepared in the Example 7 to such concentration of the active compound as indicated in Table 9. The mixture of the soil and the granules was stirred and mixed uniformly and then charged into a pot having an area of 1/5,000 ares. In the treated soil charged in the pot were sown 20 tomato plant seeds per pot. The tomato seeds were cultivated in a green house. 4 weeks after the seed sowing, the grown roots of the young tomato plant were withdrawn from the soil

without damaging the roots, and the degree of injury of the roots was evaluated according to the following ratings to estimate the root-knot index:

Ratings of root-knot (Degree of injury):

0 — No root-knot formation (perfect control).

1 — Slight root-knot formation was observed at the tip of small side-roots.

2 — Root-knot formation was observed in the small side-roots but the knots formed were not yet connected to each other.

3 — Root-knot formation was observed along the whole length of the small side-roots with some knots being connected to each other.

4 — Root-knot formation was observed in the main root, too, with the many knots in the side-roots being connected to each other.

5 — The number of root-knots formed were very large, with the knots connected to each other in the main root and also in the side-roots (corresponding to the "control" plot where no treatment was made).

Root-knot index was estimated according to the following equation:

$$\text{Root-Knot index (\%)} = \frac{\Sigma\,(\text{Rating value} \times \text{Number of roots alloted the same rating value})}{(\text{Total number of plants under test}) \times 5} \times 100$$

The tests were conducted with three replicates for a particular value of the concentration of the active compound under test, and the average of the estimated root-knot indexes was calculated. The results (expressed as the average % root-knot index) are listed in Table 9 below.

TABLE 9

| Test Compound | Root-knot Index (%) Rate of application of active compound (Kg/10 ares) 3 | 1 |
|---|---|---|
| Compound No. 2 | 0 | 8 |
| Compound No. 7 | 0 | 14 |
| Compound No. 11 | 0 | 11 |
| Compound No. 12 | 0 | 14 |
| Compound No. 15 | 2 | 21 |
| Comparative Compound B | 27 | 78 |
| Comparative Compound F | 20 | 62 |
| Comparative Compound G | 12 | 63 |
| No treatment (Control) | 98 | |

Example 16

This Example illustrates the test for estimating the insecticidal activity of test compounds against *Thrips palmi*.

A piece of the foliage of a musk-melon which was cut off by means of a leaf-punch of 8 cm diameter was immersed for 10 seconds in a volume of the composition under test which was prepared by diluting with water the wettable powder of this invention made in the Example 5 to the concentration of the active compound indicated in Table 10 below. The foliage piece was dried in air and then placed on the bottom of a Petri dish of 9 cm diameter. Ten adult *Thrips palmi* were subsequently placed and confined in said dish, and the dish was kept in a constant-temperature room at 25°C. 48 hours later, the number of the dead insects was counted and % mortality was assessed. The tests were conducted with three replicates for a particular value of the concentration of the active compound under test, and the average of % mortality was calculated. The test results are shown in Table 10 below.

TABLE 10

| Test Compounds | Mortality (%) Concentration of active compound used for treatment (ppm) 500 | 100 |
|---|---|---|
| Compound No. 1 | 100 | 93 |
| Compound No. 2 | 100 | 100 |
| Compound No. 3 | 100 | 97 |
| Compound No. 4 | 100 | 87 |
| Compound No. 5 | 100 | 90 |
| Compound No. 6 | 100 | 90 |
| Compound No. 7 | 100 | 80 |
| Compound No. 8 | 100 | 83 |
| Compound No. 9 | 100 | 90 |
| Compound No. 10 | 100 | 100 |
| Compound No. 11 | 100 | 100 |
| Compound No. 12 | 100 | 83 |
| Compound No. 13 | 100 | 80 |
| Compound No. 14 | 100 | 100 |
| Compound No. 15 | 100 | 93 |
| Compound No. 16 | 100 | 100 |
| Compound No. 17 | 100 | 97 |
| Comparative Compound A | 63 | 17 |
| Comparative Compound B | 37 | 0 |
| Comparative Compound C | 77 | 33 |
| Comparative Compound D | 80 | 30 |
| Comparative Compound E | 90 | 47 |
| Comparative Compound F | 87 | 50 |
| Comparative Compound G | 20 | 0 |
| Comparative Compound H | 67 | 0 |
| No treatment (Control) | 0 | |

Example 17

This Example illustrates the test for estimating the insecticidal activity of test compounds against comstock mealy-bug. A piece of pumpkin infested with second-instar larvae of comstock mealybug (*Pseudococcus comstocki*) was immersed for 10 seconds in a volume of the composition under test which was prepared by diluting with water the wettable powder of this invention made in the Example 5 to the concentration of the active compound indicated in Table 11 below. After this treatment, the pumpkin piece with the insects was placed on a sheet of filter paper covering the bottom of a Petri dish of 9 cm diameter. The insects were confined in said dish, and the dish was kept in a constant-temperature room at 25°C. 48 hours later, the number of the dead insects was counted under microscope, and % mortality was assessed. The tests were conducted with three replicates for a particular value of the concentration of the active compound under test, and the average of % mortality was calculated. The test results are shown in Table 11 below.

TABLE 11

| Test Compounds | Mortality (%) Concentration of active compound used for treatment (ppm) 100 | 30 |
|---|---|---|
| Compound No. 1 | 100 | 96 |
| Compound No. 2 | 100 | 100 |
| Compound No. 3 | 100 | 90 |
| Compound No. 4 | 100 | 92 |
| Compound No. 5 | 100 | 97 |
| Compound No. 6 | 100 | 97 |
| Compound No. 7 | 100 | 95 |
| Compound No. 8 | 100 | 100 |
| Compound No. 9 | 100 | 94 |
| Compound No. 10 | 100 | 96 |
| Compound No. 11 | 100 | 91 |
| Compound No. 12 | 100 | 93 |
| Compound No. 13 | 100 | 90 |
| Compound No. 14 | 100 | 100 |
| Compound No. 15 | 100 | 98 |
| Compound No. 16 | 100 | 94 |
| Compound No. 17 | 100 | 96 |
| Comparative Compound A | 80 | 46 |
| Comparative Compound B | 83 | 47 |
| Comparative Compound C | 85 | 51 |
| Comparative Compound D | 77 | 26 |
| Comparative Compound E | 92 | 63 |
| Comparative Compound F | 90 | 44 |
| Comparative Compound G | 81 | 40 |
| Comparative Compound H | 76 | 35 |
| No treatment (Control) | 0 | |

Example 18

This Example illustrates the test for estimating the insecticidal activity of test compounds against twenty-eight-spotted ladybird.

A piece of the foliage of an egg-plant which was cut off by means of a leaf-punch of 8 cm diameter was immersed for 10 seconds in a volume of the composition under test which was prepared by diluting with water the wettable powder of this invention made in the Example 5 to the concentration of the active compound indicated in Table 12 below. The foliage piece was dried in air and then placed on the bottom of a Petri dish of 9 cm diameter. Ten larvae of twenty-eight-spotted ladybird (*Henosepilachna vigintioctopunctata*) were subsequently placed and confined in said dish, and the dish was kept in a constant-temperature room at 25°C. 48 hours later, the number of the dead insects was counted and % mortality was assessed. The tests were conducted with three replicates for a particular value of the concentration of the active compound under test, and the average of % mortality was calculated. The test results are shown in Table 12 below.

TABLE 12

| Test Compounds | Mortality (%) Concentration of active compound used for treatment (ppm) 300 | 100 |
|---|---|---|
| Compound No. 1 | 100 | 93 |
| Compound No. 2 | 100 | 100 |
| Compound No. 3 | 100 | 47 |
| Compound No. 4 | 100 | 100 |
| Compound No. 5 | 100 | 90 |
| Compound No. 6 | 100 | 97 |
| Compound No. 7 | 100 | 93 |
| Compound No. 8 | 100 | 100 |
| Compound No. 9 | 100 | 93 |
| Compound No. 10 | 100 | 100 |
| Compound No. 11 | 100 | 90 |
| Compound No. 12 | 100 | 93 |
| Compound No. 13 | 100 | 97 |
| Compound No. 14 | 100 | 100 |
| Compound No. 15 | 100 | 97 |
| Compound No. 16 | 100 | 100 |
| Compound No. 17 | 100 | 93 |
| Comparative Compound A | 90 | 37 |
| Comparative Compound B | 43 | 57 |
| Comparative Compound C | 87 | 43 |
| Comparative Compound D | 100 | 60 |
| Comparative Compound E | 87 | 47 |
| Comparative Compound F | 93 | 53 |
| Comparative Compound G | 93 | 50 |
| No treatment (Control) | 0 | |

**Claims**

1. Compounds of the general formula:

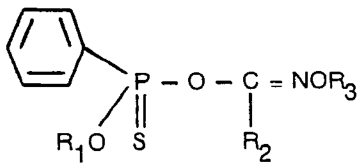

(I)

wherein $R_1$ is an alkyl group containing 1—6 carbon atoms, $R_2$ is a hydrogen atom, an alkyl group containing 1—6 carbon atoms, an alkenyl group containing 2—6 carbon atoms or an alkynyl group containing 2—6 carbon atoms, and $R_3$ is an alkyl group containing 1—6 carbon atoms, an alkenyl group containing 2—6 carbon atoms or an alkynyl group containing 2—6 carbon atoms.

2. Compounds according to Claim 1 wherein $R_1$ is methyl or ethyl; $R_2$ is hydrogen, methyl, ethyl, n-propyl, i-propyl, n-butyl, vinyl, propenyl or ethynyl; and $R_3$ is methyl, ethyl, i-propyl, vinyl, allyl or propargyl.

3. Compounds of the general formula:

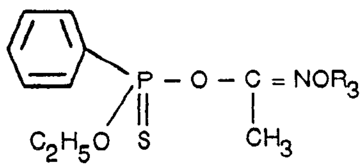

(I′)

wherein $R_3$ is an alkyl group of 1—4 carbon atoms, an alkenyl group of 2—3 carbon atoms or an alkynyl group of 2—4 carbon atoms.

4. Compound according to Claim 3 wherein $R_3$ is methyl, ethyl, i-propyl, allyl or propargyl.

5. A compound according to Claim 1 selected from:
O-ethyl, O-(N-methoxyformimidoyl) phenylthionophosphonate;
O-ethyl, O-(N-methoxyacetimidoyl) phenylthionophosphonate;
O-ethyl, O-(N-methoxypropionimidoyl) phenylthionophosphonate;
O-ethyl, O-(N-methoxy-n-butyrimidoyl) phenylthionophosphonate;
O-ethyl, O-(N-ethoxy-i-butyrimidoyl) phenylthionophosphonate;
O-ethyl, O-(N-methoxyvalerimidoyl) phenylthionophosphonate;
O-ethyl, O-(N-methoxyacrylimidoyl) phenylthionophosphonate;
O-ethyl, O-(N-methoxycrotonimidoyl) phenylthionophosphonate;
O-ethyl, O-(N-ethoxypropionimidoyl) phenylthionophosphonate;
O-ethyl, O-(N-ethoxyacetimidoyl) phenylthionophosphonate;
O-ethyl, O-(N-i-propoxyacetimidoyl) phenylthionophosphonate;
O-ethyl, O-(N-allyloxyacetimidoyl) phenylthionophosphonate;
O-ethyl, O-(N-propargyloxyacetimidoyl) phenylthionophosphonate;
O-methyl, O-(N-methoxyacetimidoyl) phenylthionophosphonate;
O-methyl, O-(N-ethoxycrotonimidoyl) phenylthionophosphonate;
O-methyl, O-(N-propoxyacetimidoyl) phenylthionophosphonate; and
O-methyl, O-(N-allyloxyacetimidoyl) phenylthionophosphonate.

6. A process for the production of a compound of the general formula:

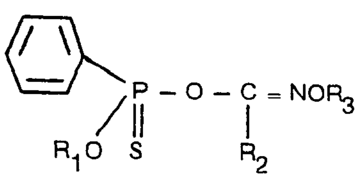

(I)

wherein $R_1$, $R_2$ and $R_3$ have the meanings as defined in claim 1 which comprises reacting a phenylthionophosphonic halide of the general formula:

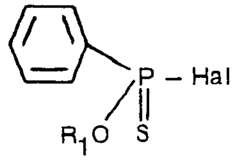

(II)

wherein Hal denotes a halogen atom and $R_1$ has the same meaning as defined above with a hydroxamate of the general formula:

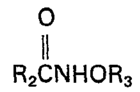

(III)

wherein $R_2$ and $R_3$ have the same meanings as defined above.

7. A pesticidal composition comprising as an active ingredient an insecticidally, miticidally and/or nematocidally effective amount of a compound of the general formula:

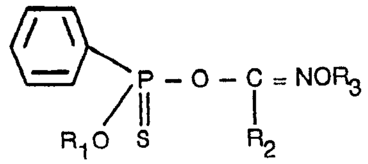

(I)

wherein $R_1$, $R_2$ and $R_3$ have the meanings as defined in claim 1 in combination with an acceptable carrier or diluent.

8. A method of combating insect pests, acarine pests and/or nematode pests at a locus of infestation, which comprises treating the pests or the locus of infestation with an insecticidally, miticidally and/or nematocidally effective amount of a compound of the general formula:

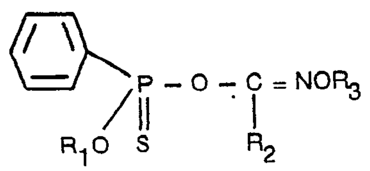

(I)

wherein $R_1$, $R_2$ and $R_3$ have the meanings as defined in claim 1.

**Patentansprüche**

1. Verbindungen der allgemeinen Formel:

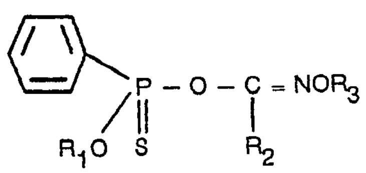

(I)

worin $R_1$ eine Alkylgruppe mit 1 bis 6 Kohlenstoffatomen ist, $R_2$ ein Wasserstoffatom, eine Alkylgruppe mit 1 bis 6 Kohlenstoffatomen, eine Alkenylgruppe mit 2 bis 6 Kohlenstoffatomen oder eine Alkinylgruppe mit 2 bis 6 Kohlenstoffatomen ist und $R_3$ eine Alkylgruppe mit 1 bis 6 Kohlenstoffatomen, eine Alkenylgruppe mit 2 bis 6 Kohlenstoffatomen oder eine Alkinylgruppe mit 2 bis 6 Kohlenstoffatomen ist.

2. Verbindungen nach Anspruch 1, worin $R_1$ Methyl oder Ethyl ist, $R_2$ Wasserstoff, Methyl, Ethyl, n-Propyl, i-Propyl, n-Butyl, Vinyl, Propenyl oder Ethinyl ist; und $R_3$ Methyl, Ethyl, i-Propyl, Vinyl, Allyl oder Propargyl ist.

3. Verbindungen der allgemeinen Formel:

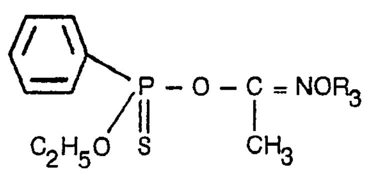

(I′)

worin $R_3$ eine Alkylgruppe von 1 bis 4 Kohlenstoffatomen, eine Alkenylgruppe von 2 bis 3 Kohlenstoffatomen oder eine Alkinylgruppe von 2 bis 4 Kohlenstoffatomen ist.

4. Verbindung nach Anspruch 3, worin $R_3$ Methyl, Ethyl, i-Propyl, Allyl oder Propargyl ist.

5. Verbindung nach Anspruch 1, ausgewählt aus:
O-Ethyl, O-(N-Methoxyformimidoyl) Phenylthionophosphonat;
O-Ethyl, O-(N-Methoxyacetimidoyl) Phenylthionophosphonat;
O-Ethyl, O-(N-Methoxypropionimidoyl) Phenylthionophosphonat;
O-Ethyl, O-(N-Methoxy-n-Butyrimidoyl) Phenylthionophosphonat;
O-Ethyl, O-(N-Ethoxy-i-Butyrimidoyl) Phenylthionophosphonat;
O-Ethyl, O-(N-Methoxyvalerimidoyl) Phenylthionophosphonat;
O-Ethyl, O-(N-Methoxyacrylimidoyl) Phenylthionophosphonat;
O-Ethyl, O-(N-Methoxycrotonimidoyl) Phenylthionophosphonat;
O-Ethyl, O-(N-Ethoxypropionimidoyl) Phenylthionophosphonat;
O-Ethyl, O-(N-Ethoxyacetimidoyl) Phenylthionophosphonat;
O-Ethyl, O-(N-i-Propoxyacetimidoyl) Phenylthionophosphonat;
O-Ethyl, O-(N-Allyloxyacetimidoyl) Phenylthionophosphonat;
O-Ethyl, O-(N-Propargyloxyacetimidoyl) Phenylthionophosphonat;
O-Methyl, O-(N-Methoxyacetimidoyl) Phenylthionophosphonat;
O-Methyl, O-(N-Ethoxycrotonimidoyl) Phenylthionophosphonat;
O-Methyl, O-(N-Propoxyacetimidoyl) Phenylthionophosphonat; und
O-Methyl, O-(N-Allyloxyacetimidoyl) Phenylthionophosphonat.

6. Ein Verfahren zur Herstellung einer Verbindung der allgemeinen Formel:

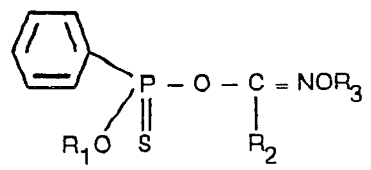

(I)

in welcher $R_1$, $R_2$ und $R_3$ die in Anspruch 1 definierten Bedeutungen haben, umfassend die Umsetzung eines Phenylthionophosphonsäurehalogenids der allgemeinen Formel

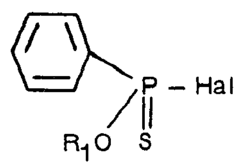

(II)

in welcher Hal ein Halogenatom und $R_1$ die oben definierte Bedeutung hat, mit einem Hydroxamat der allgemeinen Formel

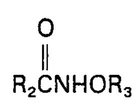

(III)

in welcher $R_2$ und $R_3$ die oben angegebene Bedeutung haben.

7. Pestizid wirkende Zusammensetzung, die als einen aktiven Bestandteil eine insektizidisch, mitizidisch und/oder nematozidisch wirksame Menge einer Verbindung der allgemeinen Formel

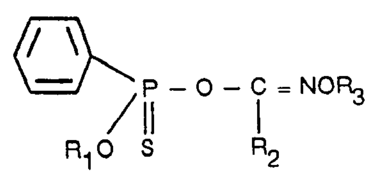

(I)

worin $R_1$, $R_2$ und $R_3$ die in Anspruch 1 angegebene Bedeutung hat, in Kombination mit einem geeigneten Trägerstoff oder Verdünnungsmittel enthält.

8. Ein Verfahren zur Bekämpfung von Insektenschädlingen, Acaridschädlingen und/oder Nematoden-Schädlingen am Ort ihres Befalls, umfassend das Behandeln der Schädlinge oder des Ortes des Befalls mit

einer insektizidisch, mitizidisch und/oder nematozidisch wirkenden Menge einer Verbindung der allgemeinen Formel

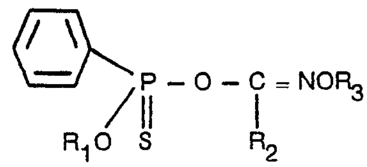

(I)

worin $R_1$, $R_2$ und $R_3$ die in Anspruch 1 angegebene Bedeutung haben.

**Revendications**

1. Composés présentant la formule générale:

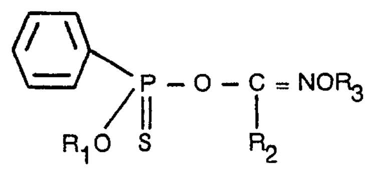

(I)

dans laquelle $R_1$ est un groupe alkyl renfermant de 1 à 6 atomes de carbone, $R_2$ est un atome d'hydrogène, un groupe alkyl renfermant de 1 à 6 atomes de carbone, un groupe alkényl renfermant de 2 à 6 atomes de carbone ou un groupe alkynyl renfermant de 2 à 6 atomes de carbone, et $R_3$ est un groupe alkyl renfermant de 1 à 6 atomes de carbone, un groupe alkényl renfermant de 2 à 6 atomes de carbone ou un groupe alkynyl renfermant de 2 à 6 atomes de carbone.

2. Composés selon la revendication 1, dans lesquels $R_1$ est le groupe méthyl ou éthyl; $R_2$ est l'hydrogène, le groupe méthyl, éthyl, n-propyl, i-propyl, n-butyl, vinyl, propényl, ou éthynyl; et $R_3$ est le groupe méthyl, éthyl, i-propyl, vinyle, allyl ou propargyl.

3. Composés présentant la formule générale:

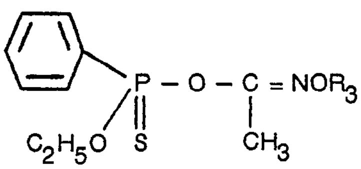

(I')

dans laquelle $R_3$ est un groupe alkyl de 1 à 4 atomes de carbone, un groupe alkényl de 2 à 3 atomes de carbone ou un groupe alkynyl de 2 à 4 atomes de carbone.

4. Composé selon la revendication 3, dans lequel $R_3$ est le groupe méthyl, éthyl, i-propyl, allyl ou propargyl.

5. Composé selon la revendication 1 choisi parmi les composés suivants:
le O-éthyl, O-(N-méthoxyformimidoyl) phénylthionophosphonate
le O-éthyl, O-(N-méthoxyacétimidoyl) phénylthionophosphonate
le O-éthyl, O-(N-méthoxypropionimidoyl) phénylthionophosphonate
le O-éthyl, O-(N-méthoxy-n-butyrimidoyl) phénylthionophosphonate
le O-éthyl, O-(N-éthoxy-i-butyrimidoyl) phénylthionophosphonate
le O-éthyl, O-(N-méthoxyvalérimidoyl) phénylthionophosphonate
le O-éthyl, O-(N-méthoxyacrylimidoyl) phénylthionophosphonate
le O-éthyl, O-(N-méthoxycrotonimidoyl) phénylthionophosphonate
le O-éthyl, O-(N-éthoxypropionimidoyl) phénylthionophosphonate
le O-éthyl, O-(N-éthoxyacétimidoyl) phénylthionophosphonate
le O-éthyl, O-(N-i-propoxyacétimidoyl) phénylthionophosphonate
le O-éthyl, O-(N-allyloxyacétimidoyl) phénylthionophosphonate
le O-éthyl, O-(N-propargyloxyacétimidoyl) phénylthionophosphonate
le O-méthyl, O-(N-méthoxyacétimidoyl) phénylthionophosphonate
le O-méthyl, O-(N-éthoxycrotonimidoyl) phénylthionophosphonate
le O-méthyl, O-(N-propoxyacétimidoyl) phénylthionophosphonate et,
le O-méthyl, O-(N-allyloxyacétimidoyl) phénylthionophosphonate.

6. Procédé d'obtention d'un composé de formule générale:

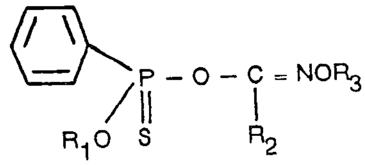

(I)

dans laquelle $R_1$, $R_2$ et $R_3$ ont les significations mentionnées dans la revendication 1, qui consiste à faire réagir un halogène phénylthionophosphonique de formule générale:

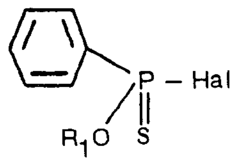

(II)

dans laquelle Hal est un atome d'halogène et $R_1$ a la signification mentionnée ci-avant avec un hydroxamate de formule générale:

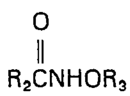

(III)

dans laquelle $R_2$ et $R_3$ ont les significations mentionnées ci-avant.

7. Composition pesticide contenant, comme ingrédient actif, une quantité active vis-à-vis des insectes, des acariens et des nématodes d'un composé de formule générale:

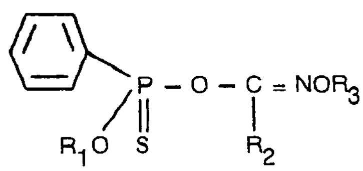

(I)

dans laquelle $R_1$, $R_2$ et $R_3$ ont les significations mentionnées ci-avant, en combinaison avec un support ou un diluant convenable.

8. Procédé de lutte contre les insectes nuisibles, les acariens nuisibles et/ou les nématodes nuisibles sur le lieu d'infestation, qui consiste à traiter les nuisibles ou le lieu de l'infestation avec une quantité active vis-à-vis des insectes, des acariens et des nématodes d'un composé de formule générale:

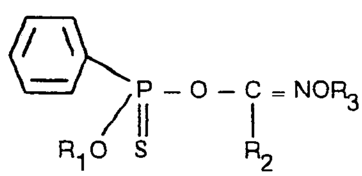

(I)

dans laquelle $R_1$, $R_2$ et $R_3$ ont les significations mentionnées ci-avant.